# FASCICULE DE BREVET EUROPEEN

(11) **EP 3 154 814 B1**
(45) Date de publication et mention de la délivrance du brevet: **11.04.2018**
(21) Numéro de dépôt: 15728059.5
(22) Date de dépôt: 13.05.2015
(51) Int. Cl.: H01M 10/613, H01M 10/625, H01M 10/633, H01M 10/6563, B60L 11/18

(54) **MÉTHODE DE CONTRÔLE DE TEMPÉRATURE D'UNE UNITÉ ÉLECTRIQUE DE VÉHICULE AUTOMOBILE**
VERFAHREN ZUR STEUERUNG DER TEMPERATUR EINER ELEKTRISCHEN EINHEIT EINES KRAFTFAHRZEUGS
METHOD FOR CONTROLLING THE TEMPERATURE OF AN ELECTRICAL UNIT OF A MOTOR VEHICLE

(30) Priorité: 12.06.2014 FR 1455324
(43) Date de publication de la demande: 19.04.2017
(73) Titulaire: PSA Automobiles SA, 78300 Poissy (FR)
(72) Inventeur: SAINFLOU, Damien Pierre, 95160 Montmorency (FR); MENET, Benoit, 92210 St Cloud (FR); COUTO DA COSTA, Antonio, 78400 Chatou (FR); GUILLAUME, Florian, 95870 Bezons (FR)
(86) Numéro de dépôt international: PCT/FR2015/051261
(87) Numéro de publication internationale: WO 2015/189491

(56) Documents cités:
- EP-A1- 1 932 707
- EP-A1- 2 226 887
- US-A1- 2003 118 891
- US-A1- 2009 257 190
- US-A1- 2014 032 011

## Description

L'invention a trait au refroidissement d'une unité électrique. L'invention a trait également au domaine des véhicules comprenant un moyen de propulsion électrique. Plus particulièrement, l'invention a trait au refroidissement d'une unité de stockage d'énergie électrique de véhicule automobile.

Un véhicule hybride comprend une unité de stockage d'énergie électrique destinée à alimenter un moteur électrique pour la propulsion du véhicule. Cette unité est également classiquement destinée à alimenter le reste des équipements du véhicule. Il est connu que l'unité de stockage peut comprendre une batterie à haute tension destinée à délivrer la puissance nécessaire à la propulsion du véhicule, batterie à laquelle est couplé un convertisseur DC/DC pour l'alimentation du véhicule en tension de bord. Une telle unité émet de la chaleur lors de son fonctionnement, il est connu de la refroidir par un dispositif de refroidissement du type ventilateur, le dispositif aspirant généralement de l'air de l'intérieur de l'habitacle, le flux d'air projeté sur les composants de l'unité pouvant les refroidir.

Il est nécessaire de contrôler le flux d'air de refroidissement de telle manière que la batterie et le convertisseur DC/DC puissent fonctionner correctement et ne pas s'endommager.

Or la batterie et le convertisseur de l'unité de stockage électrique présentent des puissances thermiques dissipées relativement différentes, un refroidissement non adaptée pouvant être dommageable à l'unité. La batterie et le convertisseur ont également des températures de fonctionnement cible ou critique pouvant être sensiblement différents, un refroidissement non adapté pouvant également être préjudiciable au rendement de l'unité de stockage électrique.

Le document de brevet US 20120206093 A1 divulgue une méthode de contrôle de la température à l'intérieur d'un endroit cloisonné dans lequel est logée au moins une batterie, la température de l'endroit cloisonné étant régulée par un ventilateur. Cet enseignement est intéressant en ce que la méthode comprend l'établissement d'une consigne dynamique du régime du ventilateur et qui est configurée de façon à ce que la température optimale de l'endroit cloisonné soit maintenue. Une telle méthode n'est cependant pas applicable pour contrôler divers équipements dont les températures cibles de fonctionnement ne sont pas similaires.
Le document de brevet US 20050111167 A1 divulgue un dispositif de refroidissement d'une unité de stockage d'énergie électrique ainsi que d'un convertisseur et un onduleur, ces deux derniers ayant un besoin de dissipation de chaleur inférieur à celui de l'unité de stockage. Cette dernière est disposée en amont des appareils électroniques par rapport au flux d'air de refroidissement. Ce document est intéressant en ce qu'il propose une solution pour opérer le refroidissement de ces équipements dans un espace réduit de l'habitacle, en l'occurrence sous un siège. Cet enseignement se limite à l'agencement des équipements pour obtenir le refroidissement.

Le document de brevet EP1932707 divulgue une méthode de contrôle d'un dispositif de refroidissement d'une unité de stockage d'énergie électrique comprenant un convertisseur DC/DC et une batterie.

L'invention a pour objectif de proposer une solution pour pallier au moins un inconvénient de l'état de la technique, notamment de l'état de la technique susmentionné. Plus particulièrement, l'invention a pour objectif de proposer une méthode de contrôle d'un dispositif de refroidissement d'une unité électrique de manière à prévenir tout dommage aux équipements de l'unité et à ne pas limiter le rendement de l'unité.
L'invention a pour objet une méthode de contrôle d'un dispositif de refroidissement d'une unité électrique, notamment d'une unité de stockage d'énergie électrique pour véhicule automobile hybride, ladite unité comprenant au moins deux composants dont un premier composant avec une puissance maximale à dissiper inférieure à celle(s) de l'autre ou des autres composants ; la méthode comprenant l'établissement d'une consigne de fonctionnement du dispositif de refroidissement en fonction des besoins en refroidissement de chacun des composants ; remarquable en ce que la consigne de fonctionnement du dispositif de refroidissement est établie de manière à pouvoir correspondre à une consigne maximale dudit dispositif lorsque seul le premier composant a un besoin de dissipation maximal.
Selon l'invention, le besoin en refroidissement du premier composant est une fonction non linéaire d'un paramètre de l'état thermique dudit composant, ledit paramètre étant inversement proportionnel à la différence entre la température mesurée du composant et une température critique.

Selon un mode avantageux de l'invention, la puissance maximale à dissiper du premier composant est comprise entre 5% et 50% de la puissance maximale à dissiper de l'autre ou des autres composants.

Selon un mode avantageux de l'invention, la consigne de fonctionnement du dispositif de refroidissement, exprimée en taux de la consigne maximale dudit dispositif, est basée sur le, et peut correspondre au, plus grand des besoins en refroidissement de chacun des composants, lesdits besoins étant exprimés en taux de leurs puissances maximales à dissiper, respectivement.

Selon un mode avantageux de l'invention, le taux de la puissance maximale à dissiper d'un ou plusieurs composant(s) est déterminé sur base de la température du ou des composant(s) en comparaison avec une température critique.

Selon un mode avantageux de l'invention, le taux de la puissance maximale à dissiper d'un ou plusieurs composant(s) est déterminé sur base de la température du ou des composants en comparaison avec la température de l'air insufflé sur le ou les composant(s) et/ou de la température cible du ou des composant(s).

Selon un mode avantageux de l'invention, la consigne de fonctionnement du dispositif de refroidissement peut être limitée en fonction de paramètres extérieurs à l'unité, tels que la température extérieure à l'unité et la tension électrique disponible pour alimenter le dispositif de refroidissement.

Selon un mode avantageux de l'invention, la température mesurée du composant est la température moyenne de plusieurs éléments du composant.

Selon un mode avantageux de l'invention, le paramètre de l'état thermique est déterminé avec une valeur égale à 0 lorsque la température mesurée est inférieure à une température comprise entre 5° et 40°, préférentiellement entre 15° et 25°.

Selon un mode avantageux, le paramètre de l'état thermique est déterminé avec une valeur égale à 100 lorsque la température mesurée est supérieure à une température supérieure inférieure ou égale à la température critique. La température supérieure peut être comprise entre 60° et 100°, préférentiellement entre 70° et 90°.

Selon un mode avantageux de l'invention, la fonction non linéaire est croissante et telle que le taux d'augmentation du besoin augmente avec le paramètre d'état thermique.

Selon un mode avantageux de l'invention, la fonction non linéaire est une fonction polynomiale ou une fonction puissance.

Selon un mode avantageux de l'invention, la fonction non linéaire est telle que le besoin en refroidissement du premier composant, exprimé en taux de la puissance maximale du composant à dissiper, vaut 1 lorsque la différence entre la température mesurée du composant et la température critique est égale à 0.

Selon un mode avantageux de l'invention, la température critique du premier composant est comprise entre 80° et 120°, préférentiellement entre 90° et 110°.

Selon un mode avantageux de l'invention, le premier composant est un convertisseur de courant DC/DC et le deuxième composant est une batterie de stockage d'énergie électrique.

Selon un mode avantageux de l'invention, la température cible de fonctionnement de la batterie de stockage d'énergie électrique est comprise entre 30° et 60°, préférentiellement entre 40° et 50°.

L'invention a également pour objet un dispositif de contrôle de refroidissement d'une unité électrique comprenant un dispositif de refroidissement et au moins deux composants dont un premier composant avec une puissance maximale à dissiper inférieure à celle(s) de l'autre ou des autres composants, ce dispositif de contrôle de refroidissement comprenant des moyens électroniques tels qu'un microcontrôleur, remarquable en ce que le dispositif est configuré pour mettre en oeuvre la méthode conforme à l'invention.

Selon un mode avantageux de l'invention, le dispositif est apte à limiter la puissance délivrée par le convertisseur au-delà d'une température limite avant endommagement.

Selon un mode avantageux de l'invention, la température limite est supérieure ou égale à la température critique.

L'invention a également pour objet un véhicule automobile comprenant un groupe motopropulseur hybride et une unité de stockage d'énergie électrique avec un système de refroidissement et au moins deux composants dont un premier composant avec une puissance maximale à dissiper inférieure à celle(s) de l'autre (12) ou des autres composants, ce véhicule automobile comprenant en outre un dispositif de contrôle dudit système, remarquable en ce que le dispositif de contrôle est conforme à l'invention.

Les mesures de l'invention sont intéressantes en ce que la méthode de contrôle est apte à ce que les composants de l'unité électrique puissent être refroidis selon leurs besoins spécifiques de puissance à dissiper et sans un refroidissement excessif ou insuffisant selon les conditions de fonctionnement de l'unité. En effet, le dispositif de refroidissement est contrôlé de telle façon à ce que sa consigne de fonctionnement est basée sur le plus grand des besoins de chacun des composants ce qui évite l'endommagement de l'un quelconque des composants. En outre, le besoin en refroidissement du composant dissipant moins de puissance est plus rapidement réduit selon l'écartement de sa température d'une température critique ce qui évite un refroidissement intempestif tout en limitant la consommation électrique. L'autre composant, tel que la batterie, peut donc fonctionner sur une plage de température plus élevée ce qui peut être favorable à son rendement.

D'autres caractéristiques et avantages de la présente invention seront mieux compris à l'aide de la description et des dessins parmi lesquels :
- La figure 1 est une vue schématique simplifiée d'une unité de stockage d'énergie électrique avec deux composants et un dispositif de refroidissement, conforme à l'invention ;
- La figure 2 est un diagramme simplifié de la méthode de contrôle conforme à l'invention du dispositif de refroidissement de l'unité de stockage de la figure 1 ;
- La figure 3 est une représentation graphique de la détermination conforme à l'invention d'un paramètre de l'état thermique du premier composant des figures 1 et 2 en fonction de sa température ;
- La figure 4 est une représentation graphique de la détermination conforme à l'invention du besoin en refroidissement du premier composant des figures 1 et 2 en fonction de son état thermique ;

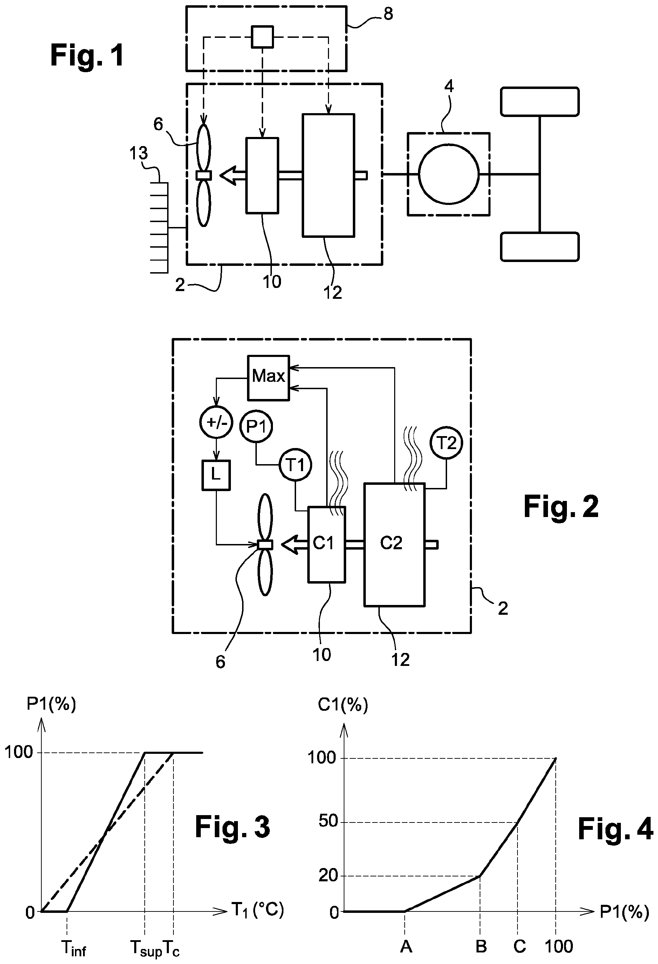

La figure 1 est une vue schématique simplifiée d'une unité de stockage d'énergie électrique 2 d'un véhicule automobile conforme à l'invention. Le véhicule comprend un groupe motopropulseur 4 hybride et une unité de stockage d'énergie électrique 2 avec un système de refroidissement 6, tel qu'un ventilateur, et un dispositif de contrôle 8 du système de refroidissement conforme à l'invention. Le dispositif de contrôle de refroidissement 8 comprend des moyens électroniques tels qu'un microcontrôleur configuré pour mettre en oeuvre la méthode de contrôle, conforme à l'invention, du système de refroidissement 6 de l'unité électrique 2. Dans un mode particulier de l'invention, la méthode est mise en oeuvre pour l'unité de stockage d'énergie électrique 2 vu ci-dessus, celle-ci comprenant un premier composant 10 qui est un convertisseur de courant DC/DC et un deuxième composant 12 qui est une batterie de stockage d'énergie électrique. La méthode peut également être mise en oeuvre pour toute unité électrique 2 comprenant au moins deux composants dont un premier composant 10 a une puissance maximale à dissiper inférieure à l'autre ou aux autres composant(s). Le premier composant 10 peut avoir une puissance maximale à dissiper comprise entre 5% et 50% de la puissance maximale à dissiper de l'autre ou des autres composant(s). En l'occurrence le convertisseur DC/DC 10 a une puissance à dissiper d'une valeur qui peut être comprise entre 200W et 300W et la batterie 12 peut être une batterie à haute tension avec une puissance à dissiper pouvant être de l'ordre de 500W à 5kW. On peut voir schématiquement sur l'image le flux d'air, représenté par une flèche traversant les composants 10 et 12 vers le dispositif de refroidissement 6, entrainé par le dispositif de refroidissement 6 et se déplaçant de la droite vers la gauche. Cette disposition ne limite en rien l'invention, toute autre disposition du dispositif, en particulier en ce qui concerne la direction du flux d'air par rapport au ventilateur étant envisageable. Dans un mode particulier de l'invention, l'unité de stockage électrique peut fournir une tension de 12V ou 24V au réseau de bord 13 du véhicule pour l'alimentation des appareils électriques.

La figure 2 est une représentation par un diagramme simplifié de la méthode de contrôle du dispositif de refroidissement 6 de l'unité électrique 2. On peut voir sur la droite de l'image les premier et deuxième composants 10 et 12 de l'unité électrique 2. Les indications C1 et C2 correspondent à leur besoin respectif de refroidissement exprimé en taux de leur puissance maximale à dissiper. On peut voir sur la gauche de l'image le dispositif de refroidissement 6 de l'unité électrique 2 ainsi que sa consigne de fonctionnement L. Cette consigne de fonctionnement est établie de manière à pouvoir correspondre à sa consigne maximale lorsque seul le premier composant 10 a un besoin de dissipation maximal. Dans un mode préféré de réalisation cette consigne L qui est un taux de la consigne maximale dudit dispositif 6, est basée sur le, voire égale au, plus grand des besoins en refroidissement C1 et C2 de chacun des composants 10 et 12. On peut voir schématiquement sur l'image par la fonction « Max » que le maximum entre le besoin en refroidissement C1 du premier composant 10 et le besoin en refroidissement C2 du deuxième composant 12, est celui retenu pour le contrôle. On peut aussi remarquer à gauche de l'image un signe « ± » qui indique un mode particulier de réalisation de la méthode de contrôle : La consigne de fonctionnement L du dispositif de refroidissement 6 peut en effet être réduite ou augmentée en fonction de paramètres extérieurs à l'unité 2, tels que la température extérieure à l'unité ou la tension électrique disponible pour alimenter le dispositif de refroidissement 6.

Dans un mode particulier de réalisation, les taux C1et C2 sont déterminés sur base des températures des composants en comparaison avec la température de l'air insufflé sur les composants 10 et 12 et/ou de leur température cible de fonctionnement. La batterie 12 est un exemple de composant pour lequel la méthode détermine le besoin C2 selon ce mode de réalisation. En effet, la température cible d'une batterie est généralement supérieure à 30° ce qui favorise son rendement ; cette température cible peut être comprise entre 30° et 60°, elle peut être comprise entre 40° et 50°. Le besoin en refroidissement C2 du composant 12 peut être déterminé selon la différence entre la température T2 du composant 12 et la température cible. Dans un autre mode particulier de réalisation, les taux C1 et C2 des puissances maximales à dissiper des premier et deuxième composants 10 et 12 sont déterminés sur base des températures des composants en comparaison avec des températures critiques de fonctionnement, généralement au-delà desquelles les composants sont endommagés. En l'occurrence le taux C1 de la puissance maximale à dissiper du premier composant 10 est déterminé sur base de la différence entre sa température T1 en fonctionnement et d'une température critique de fonctionnement. La méthode peut établir un paramètre P1 de l'état thermique du premier composant 10 inversement proportionnel à la différence entre la température mesurée T1 du premier composant 10 et la température critique ; en d'autres termes, le paramètre P1 peut augmenter au fur et à mesure que la température mesurée se rapproche de la température critique à ne pas dépasser. Ce paramètre P1 est destiné à fournir une pondération de la température mesurée T1, pondération qui a pour objectif d'augmenter la pertinence du calcul et/ou d'anticiper le refroidissement du composant. Le convertisseur DC/DC est un exemple de premier composant 10 pour lequel la méthode de contrôle peut déterminer le besoin en refroidissement C1 selon ce mode de réalisation. Les températures mesurées T1 et T2 des composants 10 et 12 peuvent être des températures moyennes de plusieurs éléments des composants tels que des éléments de puissance ou des cellules de stockage d'énergie.

La figure 3 est un graphique représentant la détermination, conforme à l'invention, du paramètre P1 de l'état thermique du premier composant de l'unité électrique en fonction de sa température T1 Dans un mode particulier de réalisation le paramètre P1 de l'état thermique est déterminé avec une valeur égale à 0 lorsque la température mesurée T1 est en deçà d'une « température inférieure » Tint qui peut être comprise entre 5° et 40°, préférentiellement entre 15° et 25°. P1 peut être déterminé avec une valeur égale à 100 lorsque la température mesurée est au-delà d'une «température supérieure» Tₛᵤₚ qui peut être comprise entre 60° et 100°, préférentiellement entre 70° et 90°. Entre Tint et Tₛᵤₚ la fonction déterminant le paramètre P1 peut être linéaire. Cette mesure est intéressante en ce que Tₛᵤₚ est avantageusement inférieure ou égale à la température critique T_{c} du premier composant au-delà de laquelle il y a endommagement. Cette détermination peut être réalisée dans le cas où il est nécessaire d'optimiser la courbe de refroidissement du premier composant en anticipant par exemple le refroidissement. Le convertisseur DC/DC peut avoir une température critique T_{c} comprise entre 80° et 120°, elle peut être comprise entre 90° et 110°. On peut observer en pointillé sur l'image une droite linéaire de coefficient égale à 1, elle représente une absence de pondération du paramètre P1 par rapport à la température mesurée T1, la méthode pouvant dans un autre mode de réalisation déterminer le besoin en refroidissement C1 directement à partir de la température T1.

La figure 4 est un graphique représentant la détermination conforme à l'invention du besoin en refroidissement C1 du premier composant en fonction du paramètre P1 de son état thermique. Le besoin en refroidissement C1 du premier composant est une fonction non linéaire de P1, elle est croissante et telle que le taux d'augmentation du besoin C1 augmente avec le paramètre d'état thermique P1. Dans un mode particulier de réalisation, la fonction non linéaire est une fonction polynomiale ou une fonction puissance. La fonction peut être du type ax² + bx + c, ou bien du type ax³ + bx² + cx + d ; a, b, c et d étant des nombres entiers relatifs.

Dans un autre mode préféré de réalisation, la fonction peut être une fonction linéaire par segment. On peut voir sur l'image des segments [0,A], [A,B], [B,C], [C,100] de température mesurée, segments sur chacun desquels la fonction est linéaire. Dans un mode particulier de réalisation, le besoin en refroidissement C1 du premier composant, exprimé en taux de la puissance maximale du composant à dissiper, vaut 1, ou 100%, lorsque la différence entre la température mesurée du composant et la température critique est égale à 0. C1 peut aussi valoir 1, ou 100%, lorsque la température mesurée est supérieure ou égale à la valeur de la « température supérieure » vue plus haut en relation avec la figure 3. Le dispositif peut dans le cas d'un convertisseur DC/DC en outre limiter la puissance délivrée du composant au-delà d'une température limite avant un endommagement encore plus important, la température limite pouvant être supérieure ou égale à la température critique.

## Revendications

1. Méthode de contrôle d'un dispositif de refroidissement (6) d'une unité électrique (2), notamment d'une unité de stockage d'énergie électrique pour véhicule automobile hybride, ladite unité (2) comprenant au moins deux composants dont un premier composant (10) avec une puissance maximale à dissiper inférieure à celle(s) de l'autre (12) ou des autres composants ; la méthode comprenant l'établissement d'une consigne de fonctionnement (L) du dispositif de refroidissement (6) en fonction des besoins en refroidissement (C1; C2) de chacun des composants (10 ; 12) ;
la consigne de fonctionnement (L) du dispositif de refroidissement (6) étant établie de manière à pouvoir correspondre à une consigne maximale dudit dispositif (6) lorsque seul le premier composant (10) a un besoin de dissipation maximal,
ladite méthode étant **caractérisée en ce que** le besoin en refroidissement (C1) du premier composant (10) est une fonction non linéaire d'un paramètre (P1) de l'état thermique dudit composant (10), ledit paramètre (P1) étant inversement proportionnel à la différence entre la température mesurée (T1) du composant (10) et une température critique (T_{c}).

2. Méthode selon la revendication 1, **caractérisée en ce que** la consigne de fonctionnement (L) du dispositif de refroidissement (6), exprimée en taux de la consigne maximale dudit dispositif, est basée sur le, et peut correspondre au, plus grand des besoins en refroidissement (C1 ; C2) de chacun des composants (10; 12), lesdits besoins étant exprimés en taux de leurs puissances maximales à dissiper, respectivement.

3. Méthode selon la revendication 2, **caractérisée en ce que** la consigne de fonctionnement (L) du dispositif de refroidissement (6) peut être limitée en fonction de paramètres extérieurs à l'unité (2), tels que la température extérieure à l'unité (2) et la tension électrique disponible pour alimenter le dispositif de refroidissement (6).

4. Méthode selon l'une des revendications 1 à 3, **caractérisée en ce que** la fonction non linéaire est croissante et telle que le taux d'augmentation du besoin (C1) augmente avec le paramètre d'état thermique (P1).

5. Méthode selon l'une des revendications 1 à 4, **caractérisée en ce que** la fonction non linéaire est une fonction polynomiale ou une fonction puissance.

6. Méthode selon l'une des revendications 1 à 5, **caractérisée en ce que** la fonction non linéaire est telle que le besoin en refroidissement (C1) du premier composant (10), exprimé en taux de la puissance maximale du composant (10) à dissiper, vaut 1 lorsque la différence entre la température mesurée (T1) du composant (10) et la température critique (T_{c}) est égale à 0.

7. Méthode selon l'une des revendications 1 à 6, **caractérisée en ce que** le premier composant (10) est un convertisseur de courant DC/DC et **en ce que** le deuxième composant (12) est une batterie de stockage d'énergie électrique.

8. Dispositif (8) de contrôle de refroidissement d'une unité électrique (2) comprenant un dispositif de refroidissement (6) et au moins deux composants dont un premier composant (10) avec une puissance maximale à dissiper inférieure à celle(s) de l'autre (12) ou des autres composants, ledit dispositif (8) de contrôle de refroidissement comprenant des moyens électroniques tels qu'un microcontrôleur, **caractérisé en ce que** le dispositif (8) est configuré pour mettre en oeuvre la méthode selon l'une des revendications 1 à 7.

9. Véhicule automobile comprenant un groupe motopropulseur hybride (4) et une unité de stockage d'énergie électrique (2) avec un système de refroidissement (6) et au moins deux composants dont un premier composant (10) avec une puissance maximale à dissiper inférieure à celle(s) de l'autre (12) ou des autres composants, ledit véhicule automobile comprenant en outre un dispositif de contrôle (8) dudit système, **caractérisé en ce que** le dispositif de contrôle (8) est conforme à la revendication 8.

## Patentansprüche

1. Verfahren zur Steuerung einer Kühlvorrichtung (6) einer elektrischen Einheit (2), insbesondere einer Stromspeichereinheit für Hybridkraftfahrzeug, wobei die Einheit (2) mindestens zwei Bauteile umfasst, darunter ein erstes Bauteil (10) mit einer maximalen abzuleitenden Leistung, die kleiner ist als diejenige(n) des anderen (12) oder der anderen Bauteile; wobei das Verfahren das Ermitteln eines Funktionssollwerts (L) der Kühlvorrichtung (6) in Abhängigkeit von den Kühlerfordernissen (C1; C2) jedes der Bauteile (10; 12) umfasst;
wobei der Funktionssollwert (L) der Kühlvorrichtung (6) derart ermittelt wird, dass er einem maximalen Sollwert der Vorrichtung (6) entsprechen kann, wenn nur das erste Bauteil (10) ein maximales Ableitungserfordernis hat,
Verfahren **dadurch gekennzeichnet, dass** das Kühlerfordernis (C1) des ersten Bauteils (10) eine nichtlineare Funktion eines Parameters (P1) des Wärmezustands des Bauteils (10) ist, wobei der Parameter (P1) zu dem Unterschied zwischen der gemessenen Temperatur (T1) des Bauteils (10) und einer kritischen Temperatur (T_{c}) umgekehrt proportional ist.

2. Verfahren nach Anspruch 1, **dadurch gekennzeichnet, dass** der Funktionssollwert (L) der Kühlvorrichtung (6), ausgedrückt als Prozentsatz des maximalen Sollwerts der Vorrichtung, auf dem größten der Kühlerfordernisse (C1; C2) jedes der Bauteile (10; 12) basiert und ihm entsprechen kann, wobei die Erfordernisse in Prozentsätzen ihrer jeweils abzuleitenden maximalen Leistungen ausgedrückt sind.

3. Verfahren nach Anspruch 2, **dadurch gekennzeichnet, dass** der Funktionssollwert (L) der Kühlvorrichtung (6) in Abhängigkeit von Parametern außerhalb der Einheit (2), wie der Temperatur außerhalb der Einheit (2), und der elektrischen Spannung, die verfügbar ist, um die Kühlvorrichtung (6) zu versorgen, eingeschränkt werden kann.

4. Verfahren nach einem der Ansprüche 1 bis 3, **dadurch gekennzeichnet, dass** die nichtlineare Funktion steigend und derart ist, dass die Steigerungsrate des Erfordernisses (C1) mit dem Wärmezustandsparameter (P1) steigt.

5. Verfahren nach einem der Ansprüche 1 bis 4, **dadurch gekennzeichnet, dass** die nichtlineare Funktion eine polynominale oder Potenzfunktion ist.

6. Verfahren nach einem der Ansprüche 1 bis 5, **dadurch gekennzeichnet, dass** die nichtlineare Funktion derart ist, dass das Kühlerfordernis (C1) des ersten Bauteils (10), ausgedrückt in Prozentsatz der abzuleitenden maximalen Leistung des Bauteils (10), gleich 1 ist, wenn der Unterschied zwischen der gemessenen Temperatur (T1) des Bauteils (10) und der kritischen Temperatur (T_{c}) gleich 0 ist.

7. Verfahren nach einem der Ansprüche 1 bis 6, **dadurch gekennzeichnet, dass** das erste Bauteil (10) ein Gleichstrom-/Gleichstrom-Wandler ist, und dass das zweite Bauteil (12) eine Stromspeicherbatterie ist.

8. Vorrichtung (8) zur Steuerung des Kühlens einer elektrischen Einheit (2), die eine Kühlvorrichtung (6) und mindestens zwei Bauteile umfasst, ein erstes (10) mit einem maximalen abzuleitenden Leistung, die kleiner ist als diejenige(n) des anderen Bauteils (12) oder der anderen Bauteile, wobei die Vorrichtung (8) zur Steuerung der Kühlung elektronische Mittel wie einen Mikrocontroller umfasst, **dadurch gekennzeichnet, dass** die Vorrichtung (8) konfiguriert ist, um das Verfahren nach einem der Ansprüche 1 bis 7 umzusetzen.

9. Kraftfahrzeug, das ein Hybridantriebsaggregat (4) und eine Stromspeichereinheit (2) mit einem Kühlsystem (6) und mindestens zwei Bauteilen umfasst, darunter ein erstes Bauteil (10) mit einer maximalen abzuleitenden Leistung, die kleiner ist als diejenige(n) des anderen Bauteils (12) oder der anderen Bauteile, wobei das Kraftfahrzeug außerdem eine Steuervorrichtung (8) des Systems umfasst, **dadurch gekennzeichnet, dass** die Steuervorrichtung (8) Anspruch 8 entspricht.

## Claims

1. A method for controlling a cooling device (6) of an electrical unit (2), in particular of a unit for storing electrical energy for a hybrid motor vehicle, said unit (2) including at least two components, including a first component (10) with a maximum power to be dissipated which is lower than that or those of the other (12) one or more components; the method including the establishing of an operating setpoint (L) of the cooling device (6) as a function of the cooling needs (C1; C2) of each of the components (10; 12) ;
the operating setpoint (L) of the cooling device (6) being established so as to be able to correspond to a maximum setpoint of said device (6) when only the first component (10) has a maximum dissipation need,
said method being **characterized in that** the cooling need (C1) of the first component (10) is a non-linear function of a parameter (P1) of the thermal state of said component (10), said parameter (P1) being inversely proportional to the difference between the measured temperature (T1) of the component (10) and a critical temperature (T_{c}).

2. The method according to claim 1, **characterized in that** the operating setpoint (L) of the cooling device (6), expressed at the rate of the maximum setpoint of said device, is based on, and can correspond to, the greater of the cooling needs (C1; C2) of each of the components (10; 12), said needs being expressed at the rate of their maximum powers to be dissipated, respectively.

3. The method according to claim 2, **characterized in that** the operating setpoint (L) of the cooling device (6) can be limited as a function of parameters exterior to the unit (2), such as the temperature exterior to the unit (2) and the electric voltage available for supplying the cooling device (6).

4. The method according to one of claims 1 to 3, **characterized in that** the non-linear function is an increasing function and such that the rate of increase of the need (C1) increases with the thermal state parameter (P1).

5. The method according to one of claims 1 to 4, **characterized in that** the non-linear function is a polynomial function or a power function.

6. The method according to one of claims 1 to 5, **characterized in that** the non-linear function is such that the cooling need (C1) of the first component (10), expressed at the rate of the maximum power of the component (10) to be dissipated, is equal to 1 when the difference between the measured temperature (T1) of the component (10) and the critical temperature (T_{c}) is equal to 0.

7. The method according to one of claims 1 to 6, **characterized in that** the first component (10) is a DC/DC current converter and **in that** the second component (12) is a battery for storing electrical energy.

8. A device (8) for controlling the cooling of an electrical unit (2) including a cooling device (6) and at least two components including a first component (10) with a maximum power to be dissipated which is lower than that or those of the other (12) one or more components, said device (8) for controlling cooling including electronic means such as a microcontroller, **characterized in that** the device (8) is configured so as to implement the method according to one of claims 1 to 7.

9. A motor vehicle including a hybrid powertrain (4) and a unit (2) for storing electrical energy, with a cooling system (6) and at least two components including a first component (10) with a maximum power to be dissipated which is lower than that or those of the other (12) one or more components, said motor vehicle including in addition a control device (8) of said system, **characterized in that** the control device (8) is in accordance with claim 8.
